Europäisches Patentamt

European Patent Office

Office européen des brevets

(19)

(11) Publication number: **0 195 628 B1**

## EUROPEAN PATENT SPECIFICATION

(12)

(45) Date of publication of patent specification: **03.07.91**

(51) Int. Cl.⁵: **G11B 11/10, G11B 5/127**

(21) Application number: **86301921.2**

(22) Date of filing: **17.03.86**

(54) **Magnetic head.**

(30) Priority: **20.03.85 JP 54441/85**
      **20.03.85 JP 54440/85**

(43) Date of publication of application:
      **24.09.86 Bulletin 86/39**

(45) Publication of the grant of the patent:
      **03.07.91 Bulletin 91/27**

(84) Designated Contracting States:
      **DE FR GB**

(56) References cited:
      **GB-A- 2 120 001**
      **US-A- 3 465 322**

      **PATENT ABSTRACT OF JAPAN, vol. 7, no. 32
      (P-174)[1177], 8th February 1983; & JP - A - 57
      183 646 (NIPPON DENKI) 12-11-1982**

      **PATENT ABSTRACTS OF JAPAN, vol. 8, no.
      101 (P-273)[1538], 12th May 1984; & JP - A -
      59 011 557 (TOKYO SHIBAURA) 21-01-1984**

      **IBM TECHNICAL DISCLOSURE BULLETIN, vol.
      13, no. 8, January 1971, page 2276, New York,
      US; H.A.D. O'BRIEN: "Magneto-optic conver-
      sion device"**

**PATENT ABSTRACTS OF JAPAN, vol. 7, no.
15 (P-169)[1160], 21nd January 1983; & JP - A
- 57 169 946 (AIPPON DENKI) 19-10-1982**

(73) Proprietor: **HITACHI, LTD.**
      **6, Kanda Surugadai 4-chome
      Chiyoda-ku, Tokyo 100(JP)**

(72) Inventor: **Ohta, Norio**
      **15-105, Sayama-Green Haitsu
      Sasai Sayama-shi Saitama-ken(JP)**
      Inventor: **Okamine, Shigenori**
      **4-14-6, Nishikoigakubo
      Kokubunji-shi Tokyo(JP)**
      Inventor: **Sugita, Yutaka**
      **5-12-1, Nakaarai
      Tokorozawa-shi Saitama-ken(JP)**
      Inventor: **Seo, Yosuke**
      **872-33, Aihara
      Sagamihara-shi Kanagawa-ken(JP)**
      Inventor: **Tamura, Takashi**
      **3-21-5, Hikari-cho
      Kokubunji-shi Tokyo(JP)**

(74) Representative: **Calderbank, Thomas Roger et
      al
      MEWBURN ELLIS & CO. 2/3 Cursitor Street
      London EC4A 1BO(GB)**

## Description

The present invention relates to a magnetic head which can write magnetically and read-out optically.

Known recording/reproducing systems with a high recording density include perpendicular magnetic recording and reproducing systems and magneto-optical writing and reproducing system. There is also known a recording/ reproducing system using a perpendicular magnetic head in recording and an optical read-out head utilizing magneto-optic effect in reproducing which has the advantages of both systems.

It is known to reproduce optically magnetized information from a recording medium by means of a magneto-optic effect (e.g. Faraday effect, or Kerr effect) by magnetically transferring it to a high permeability magnetic film perpendicular and adjacent the surface of a recording medium. Such a system is disclosed in e.g. JP-A-1244 of 1972. When such a device is used exclusively as a reproducing head, it is sufficient to use a thin film material with large magneto-optical effect to form a high permeability thin film. Satisfactory characteristics are obtained when the film is a single layer. However, in order to write and reproduce at high speed in a magnetic disc apparatus, a magnetic tape device and the like, a structure should be devised which permits write and read-out operations using the same head. The head disclosed in JP-A-1244 of 1972 does not permit writing.

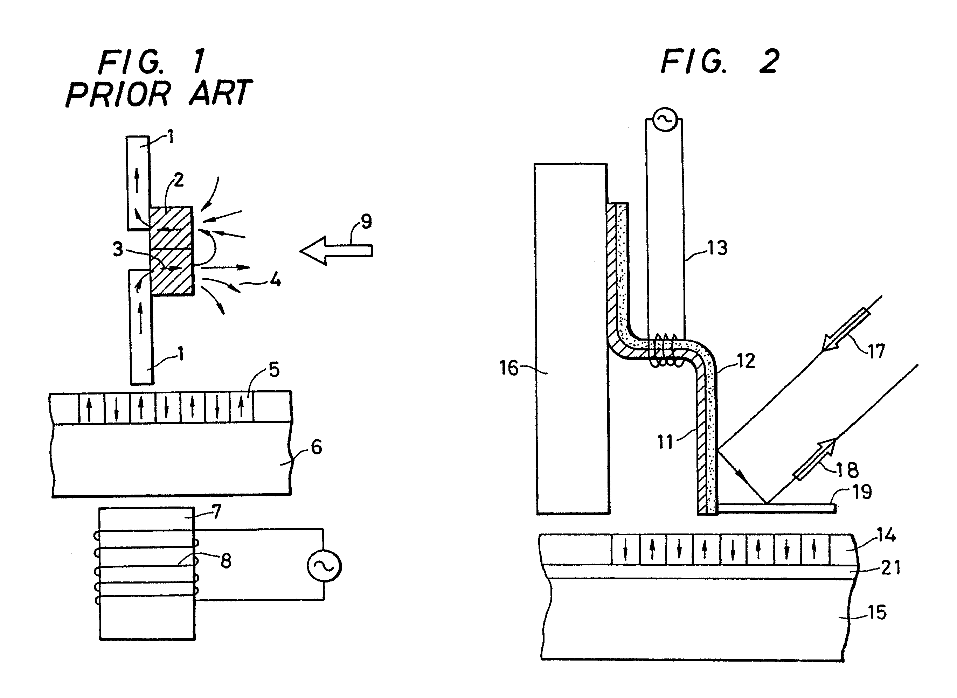

Another known optically reproducing type single pole magnetic head is shown in Fig. 1 of the accompanying drawings, which is capable of both writing and reproducing. In this head a high permeability magnetic thin film 1 of the main pole is divided into two, and a second magnetic thin film 2, which had an easy-magnetization axis in a direction perpendicular to the film surface is closely adhered to. This head is disclosed in JP-A-169946 of 1982. A polarised laser beam 9 was irradiated perpendicularly to this second thin magnetic film and the magnetized state of the main pole was discriminated by e.g. the polar Kerr effect, or the Faraday effect by perpendicularly incident optical beam. Thus, the reproduction of high density recording was effected by converting the magnetization induced in the main pole from the magnetic medium into a difference in strength of light.

However, in this method, as shown in Fig. 1, the second magnetic thin film 2 is a perpendicular magnetizable film, and hence almost all the magnetic flux 4 in the magnetic circuit is lost from the magnetic circuit in the surface of the second magnetic thin film. Therefore, in such a construction, the magnetic circuit of the main pole has a large open end, and even when the magnetized state of the main pole is reversed in dependence on a magnetic signal, it is necessary to expend extremely large amounts of energy. Hence, it becomes difficult for the magnetized state of the main magnetic pole faithfully to follow the magnetic signal from the medium. Thus, this magnetic circuit construction for making an optical reproducing head does not have a high sensitivity.

Also shown in Fig. 1, are the direction of magnetization 3, a recording medium 5, a substrate 6 of the recording medium 5, an auxiliary magnetic pole 7 and a coil 8 for writing.

JP-A-57183646 teaches a magneto-optical thin film, in which the easy magnetization axis of the magnetic film is in the direction vertical to the magneto-optical film.

The present invention, as defined in Claim 1, seeks to provide a magnetic head capable of both magnetic writing and optical read-out, which has a higher sensitivity than the known heads. It achieves this by arranging the easy-magnetization axis of the second film parallel or in the surface of that film. The second film is also capable of being magnetized by the leakage magnetic field from the magnetic recording medium.

In this way it becomes possible to provide a writing/reproducing composite type magnetic head with a good signal versus noise ratio, because the magnetic circuit construction is such that magnetized induction occurs accurately for the magnetic signal from the medium in an optical read-out single pole magnetic head.

The second magnetic thin film will have a large magneto-optic effect (e.g. Faraday effect, Kerr effect).

In the magnetic head of the present invention, writing is magnetically effected by means of the coil in the same manner as in the prior art perpendicular magnetic recording system. The reading-out of recorded signals from the recording medium is effected by the irradiation of the polarized laser beam on the surface of the second magnetic thin film and by measuring the change of polarized angle of the laser beam reflected therefrom to reproduce optically the recorded information. This optical reproducing method is fundamentally the same as the optical reproducing system using the magneto-optic effect in the prior art magneto-optical recording and reproducing system with the exception that the laser irradiated body is the second magnetic thin film mentioned above.

The recording medium for recording information by use of the magnetic head of the present invention may be the known perpendicular magnetic recording medium.

The first magnetic thin film may be of a magnetic material having high permeability and high saturation magnetization, such as, for example, known Fe-Ni alloys, Fe-N alloys, or Co-Zr alloys, as in the main pole of the known perpendicular magnetic recording head. When crystallomagnetic anisotropy is present in the first magnetic thin film, it is desirable that the easy magnetization axis is present parallel to or in the film surface, but is not necessarily to be limited to such a manner since the anisotropy is, in general, comparatively low. The second magnetic thin film may be of a magnetic material having large longitudinal Kerr effect and/or Faraday effect as well as an easy magnetization axis parallel to or in the film surface, such as, for example, magnetic garnet such as the known $Y_3Fe_5O_{12}$ (a so-called YIG), a magnetic amorphous alloy consisting of a rare earth element and a transient metal element such as Gd-Co, or a magnetic amorphous alloy such as Fe-Co-B-P, Fe-B, or Co-Zr.

In order for the second magnetic thin film to be capable of being magnetized by the leakage magnetic field from a recording medium, it is possible, for example, to couple the second magnetic thin film magnetically to the first magnetic thin film or to arrange the second magnetic thin film at approximately right angles to and in close vicinity to the recording medium surface. In order to couple both members magnetically, it is recommended, for example, that the second magnetic thin film is laminated on the first magnetic film to form a main pole with a multilayered structure, or that the first magnetic thin film is divided, with the divided first magnetic thin films being connected by the second magnetic thin film closely adhered thereto.

A reflection film (reflector) may be provided in order to give a suitable light path for the laser.

A substrate on which the magnetic materials may be adhered may be provided and a spacer formed of non-magnetic material may also be provided between layers of the multilayered films.

Embodiments of the invention will now be described in detail, by way of example, with reference to the accompanying drawings, wherein:

Fig. 1 is a schematic diagram for explaining a known read-out magnetic head, and gas already been discussed, and;

Figs. 2 to 7 are schematic diagrams for explaining respective embodiments of the present invention.

First, embodiments of the invention will be described in which the main pole of the single pole type magnetic head has a multi-layered thin film structure. This multi-layered thin film structure consists of a first layer and a second layer.

The first layer, that is, the first magnetic thin film is exclusively for writing, and is made of a magnetic thin film with high permeability and high saturation magnetization. The second layer, that is, the second magnetic thin film is exclusively for reproducing and is formed of a magnetic thin film having an easy-magnetization axis parallel to or in the film surface, high magneto-optical conversion efficiency, and high permeability. In order to raise the writing efficiency of the first layer, a third film of a non-magnetic material may be provided between the first and second layers to prevent magnetic coupling between those layers.

## Example 1

As shown in Fig. 2, a single pole magnetic head has a main pole with a double layer structure, having a first layer 11 exclusively for waiting and a second layer 12 exclusively for reproducing. The first layer is a ferro-magnetic thin film made of a material with high permeability of 6.3 to 25.1 x $10^{-4}$ T (500-2000), and preferably with a high saturation magnetization of 0.188T ($4\pi$ Ms or (4 x 3.14 x 150) G) such as e.g. FeNi or FeN. The second layer is made of a material having high magneto-optical conversion efficiency of the Kerr effect and Faraday effect such as e.g. FeB, CoZr, GdCo, or $Y_3Fe_5O_{12}$. Preferably the material of the second layer has a rotation angle of the polarisation surface by the magneto-optical effect (such as the Kerr rotation angle) of $0.2°$ or more. The auxiliary pole 16 consisting of a magnetic material such as Mn-Zn ferrite, Ni-Zn ferrite, or Co-Zr alloy returns the magnetic flux in the head to the side of the recording medium thereby closing the magnetic circuit. Further, at the lower side of the recording medium 14, is a planar magnetizable film 21, such as Permalloy, to ensure the closure of the magnetic pole. In Fig. 2, although the film 21 is disposed directly at the lower part of the medium, it may be provided in the lower part directly or indirectly.

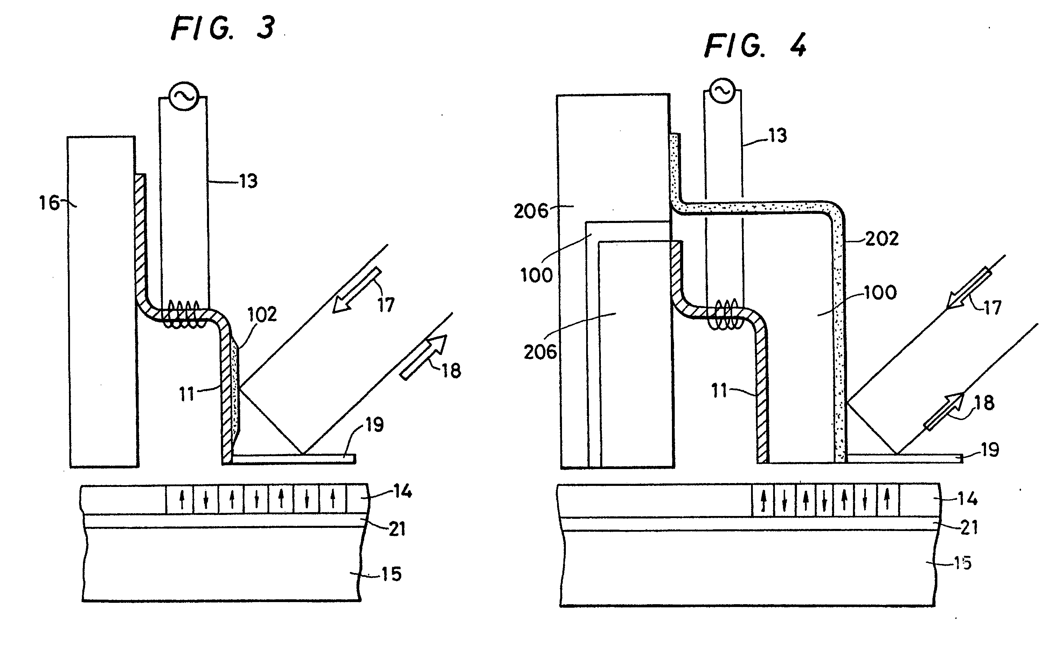

Also in Fig. 2, the arrows in the recording medium 14 designate the direction of magnetization, and also shown is the substrate 15 of the recording medium. In this example the auxiliary pole 16 is provided on a non-magnetic substrate such as, for example, glass, silicon or the like, and there is a spacer of a non-magnetic material such as, for example, $SiO_2$ between part of the auxiliary pole 16 and the first layer 11 to form a stepped shape, although these are not illustrated in Fig. 2. Also not illustrated are a transparent cover layer consisting of e.g. a high molecular resin on the second layer 12 and a reflecting film 19 on the side surface thereof. These features are also omitted from Figs. 3 and 4.

The writing and reading out of information using the optical read-out magnetic head of Example 1 will now be discussed.

When writing, the main magnetic pole having a film thickness of 0.1 $\mu$ m and a width of 3 $\mu$ m, is

excited by a coil 13 of e.g. 8 turns wound on the main pole. The saturation magnetization in the first layer is 0.314 T (4 x 3.14 x 250G), and is larger than that of the second layer, (which is 0.151T (4 x 3.14 x 120G)). Hence the perpendicular magnetic recording medium 14 such as CoCr, TbFe, CoO, etc., is magnetized by the strong magnetic flux from the forward end of the first layer, so that information is written therein.

Reproduction occurs when the leakage magnetic field from the magnetic domain written in the medium 14 magnetizes the forward end of the main pole. Thus, magnetization reverse is apt to occur in the second layer 12 with a small saturation magnetization. A linearly polarised laser beam 17 (in this embodiment, a semiconductor laser of the wave length of 800 nm was used) is applied on the surface of the second layer as shown in the figure.

The power of the laser beam 17 was 0.1 to 5mW at the film surface to be irradiated.

Kerr rotation or Faraday rotation occurs in correspondence to the magnetized state of the second layer, and the change of magnetization can be converted into a change in the polarized angle. The reflected beam 18 reaches a detector such as e.g. a PIN diode on the upper part of the head via a reflection film 19, a lens optical system and an analyser to carry out the reproduction of information as is well known.

Next, the method for manufacturing the magnetic head of the first example will be described.

An auxiliary pole 16 made of MnZn ferrite 10 $\mu$m thick was adhered on a glass substrate with thickness of 1 mm, by means of e.g. an ordinary organic adhesive. Next, as a spacer, SiO$_2$ to a thickness of 3 $\mu$m was laminated and adhered onto the ferrite by a sputtering method. Approximately half the ferrite surface was sputtered with SiO$_2$, with an aluminium mask preventing SiO$_2$ adhering to the ferrite at this part. Subsequently, the aluminium mask was dissolved using e.g. nitric acid to remove SiO$_2$ on the aluminium mask to form a structure with a step formed with SiO$_2$ on the surface of the ferrite. Then, a first layer 11, consisting of a known Fe-Ni alloy with high permeability, was laminated by an evaporation method or a sputtering method to a thickness of 20-300 nm, typically to a thickness of 100 nm. Further a second layer 12 of a known GdCo alloy with high magneto-optical conversion efficiency was laminated to a thickness of 20-300 nm, typically to a thickness of 100 nm. Subsequently, the multi-layered plate with five layer structure (including the substrate) and produced as discussed above was cut by a cutting method, such as an ion milling method, to the width of 1 to 20 $\mu$m, preferably to 1 to 3 $\mu$m, and to a length of 10 to 300 $\mu$m, typically to 100 $\mu$m. A transparent cover layer of e.g. a polyimide resin was provided on this multi-layered plate, and at the edge of the multi-layered plate, aluminium was evaporated to form a reflection film 19. The excitation coil 13 was formed by a known lithography method e.g. in the same manner as in a prior art thin film head.

Example 2

In the magnetic head of this second example shown in Fig. 3, a second layer 102 for use in the optical read-out is formed only on the part to be irradiated by the beam, and the other parts are the same as in Fig. 2. In this case, the forward end of the main pole is formed only with the first layer 11, and the forward end film thickness can be reduced to 1 to 10 $\mu$m, and typically to 3 $\mu$m, so that high density writing and reproduction has become possible. In Fig. 3, the symbols indicating parts other than the second layer 102 are the same as those for the corresponding parts in Fig. 2.

The magnetic head of this example can be produced by using a known thin film forming method such as a vacuum evaporation method or a sputtering method, and a known thin film patterning method by means of e.g. lithography, in the same manner as in Example 1.

Example 3

As shown in Fig. 4, a non-magnetic layer 100 of a thickness of 0.1 to 10 $\mu$m made of SiO$_2$, AlN, or a resin was interposed between a first layer 11 and a second layer 202 to prevent the magnetic coupling. Also in this example, an auxiliary pole 206 is separated into two parts. The other parts are the same as in Fig. 2. In this case, the role of the writing film and the optical read-out film became more evident, and the formation of suitable thin film materials respectively became possible, while maintaining the function as a composite head. In Fig. 4, the reference numerals 13, 14, 15, 17, 18, 19 and 21 designate the same parts as in Fig. 2.

The magnetic head of this example can also be produced by using a known thin film device production method as in the same manner as in Examples 1 and 2.

The magnetic head obtained in the first three Examples, improved when compared with the prior art magnetic head shown in Fig. 1, is improved, by approximately one order in magneto-optical conversion efficiency and in reproducing efficiency.

Next, in Examples 4 to 6, there are shown embodiments of a single pole type magnetic head having a structure in which the main pole comprises the above-described first magnetic thin films divided into two and the above-described second magnetic thin film connecting the two parts of the first magnetic thin films. That is, the main pole formed of the first high permeability thin film was divided into two parts, and in close adherence to these parts is arranged a second high permeability film having an easy-magnetization axis in the direction parallel to the film surface. The second film also has a high longitudinal Kerr effect or Faraday effect. By means of such an arrangement, the magnetic circuits between the divided main magnetic poles are magnetically coupled to be closed by the second magnetic film and accurate signal reproduction becomes possible.

Example 4

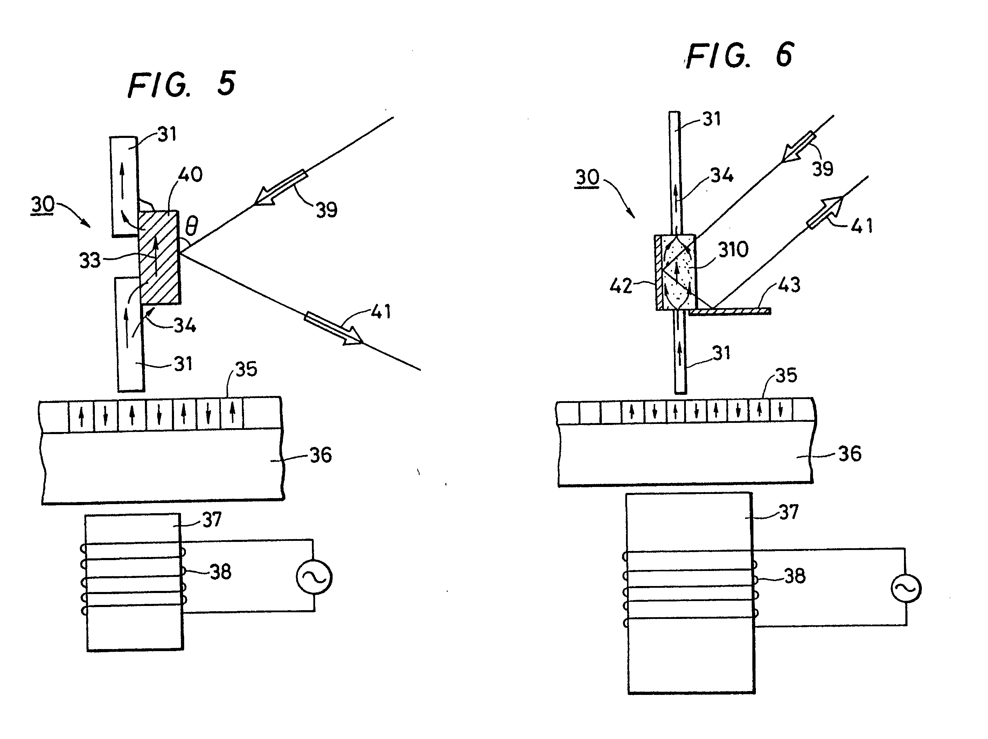

As shown in Fig. 5, a first magnetic thin film 31 consisting of a known high permeability film such as e.g. FeNi or CoZr, with film thickness of 0.05 to 0.15 $\mu$m and a width of 5 $\mu$m is placed at right angles to and in close vicinity of a perpendicular magnetic recording medium 35 of e.g. CoCr, TbFe, or CoO. Also this first magnetic thin film 31 is divided into upper and lower parts. The permeability of the first magnetic film is preferably 6.3 x $10^{-4}$ Hm$^{-1}$ (500) or more, as in Examples 1 to 3. A magnetic thin film for optical read-out, i.e. the second magnetic thin film 40, is arranged in close adherence to the first magnetic thin film 31. This thin film 40 has, an easy-magnetization axis parallel to the direction in the film surface, and is a magnetic thin film with high magneto-optical conversion efficiency such as e.g. the longitudinal Kerr effect, or the Faraday effect as in Examples 1 to 3. For example, a magnetic garnet to begin with $Y_3Fe_5O_{12}$ (YIG), a rare earth metal-transition metal system amorphous alloy to begin with GdCo, or an amorphous metal film such as FeCoBP may be used. On opposite side to this main pole (consisting of the first and second magnetic thin films) an auxiliary pole 37 consisting of a soft magnetic material such as e.g. Mn-Zn ferrite, Ni-Zn ferrite, or Co-Zr alloy and a writing coil (excitation coil) 38 are arranged in the reverse side of the medium.

In Fig. 5, the arrow 33 denotes the direction of magnetization in the second magnetic thin film 40, the arrows 34 indicate the magnetic flux, and the arrow in the recording medium 35 indicates the direction of magnetizaation in the medium. Also shown is the substrate 36 of the recording medium. The first magnetic thin film 31 is provided on a non-magnetic substrate such as e.g. glass, but this is omitted from Fig. 5.

Next the writing and reading of information by means of the magnetic head of this example will be described.

Writing is effected by exciting the auxiliary pole 37 by the coil 38 to magnetize the main pole 30, thereby to induce magnetization of the perpendicular magnetic recording medium 35 directly disposed thereunder. Read-out is carried out as follows. At first, the leakage magnetic field from the magnetic domain written in the medium 35 induces the magnetization of the first magnetic thin film 31 of the main pole 30 to order it in one direction. Furthermore, this magnetization also causes the arrangement of the magnetization of the magneto-optical thin film (i.e. the second magnetic thin film 40 attached to the first magnetic thin film 31) into the same direction as that of the first magnetic thin film 31. When a linearly polarized laser beam 39 is incident obliquely at an angle $\theta$ from above the beam reflects on the surface of the magneto-optic thin film (in the case of longitudinal Kerr effect) to become a reflected beam 41 and is passed through a lens optical system and an analyser to be introduced into a photodetector such as e.g. a PIN diode. At this instant, the polarized angle of the reflected beam is rotated in proportion to $Ms \cos \theta$, where Ms is the magnetization of the opto-magnetic thin film. This rotation angle changes sign (anti-clockwise or clockwise rotation) in dependence on the direction of the magnetization (upwards and downwards in the figure). Therefore, by detecting the sign of rotation angle, the direction of magnetization of the magneto-optic thin film, i.e. the second magnetic thin film 40, the direction of magnetization of the first magnetic thin film 31, and, further, the magnetization state of the medium 35 directly under the main pole can be reproduced according to the present example. Also, because the direction of magnetization of the magneto-optic thin film is parallel to the film surface, the magnetic flux from the first magnetic thin film can be almost completely introduced into the magneto-optic thin film and the magnetic circuit in the beam irradiated part is closed. Thus the magneto-optic reproducing efficiency is extremely high while enabling faithful reproduction for following the magnetization state of the medium.

Next, the method of manufacturing the optical readout magnetic head of this example will be discussed.

An FeNi alloy thin film with a thickness of 50 to 1500 nm, preferably 100 nm, was formed by means of an evaporation method or the sputtering method on a flat substrate such as a glass or silicon plate with thickness of approximately 1 mm to form a first magnetic film. Subsequently, the FeNi alloy thin film was divided and separated to a gap length of 100 to 1000 nm by means of electron beam lithography or photolithography to provide a gap part. In this case, the length of the Fe-Ni alloy thin film at the side part of the magnetic recording medium was 10 to 50 $\mu$m. In order to connect the separately divided first magnetic thin films 31 on this gap, a thin film (the second magnetic thin film 40) of a material having an easy-magnetization axis parallel to or in the film surface with a large magnetic Kerr effect, such as a GdCo alloy, was formed by evaporation or sputtering. The manufacture of the auxiliary pole 37 and the coil 38, are the same as those in the prior art.

## Example 5

As shown in Fig. 6, a magneto-optic thin film having an easy-magnetization direction parallel to or in the film surface, i.e. the second magnetic thin film 310, was arranged in an intermediate position in the first magnetic film 31, which is divided into two, with the ends contacting the thin film 310 to form a main pole 30. When a transparent magnetic material such as $Y_3Fe_5O_{12}$ is used, a reflecting film 42 of an aluminium thin film formed by evaporation may also be provided. Moreover, a secondary reflection film 43 for directing the reflected beam 41 to the upper part of the disc of the recording medium is also provided. In this Example, the loss of flux is small and the flux in the first magnetic thin film 31 is introduced into the magneto-optic thin film, i.e. the second magnetic thin film 310 more efficiently than in the case of Example 4, and a preferable result can be obtained.

Although not illustrated in Fig. 6, a transparent cover layer for supporting the secondary reflection film 43 is provided, and the secondary reflection film 43 is adhered to the side thereof. Further, symbols in Fig. 6 other than the above are the same as those in Fig. 5.

The magnetic head of this Example can be manufactured in the same manner as in Example 4 by using a thin film device manufacturing method utilizing known thin film formation methods such as an evaporation method or a sputtering method, and by known thin film patterning methods, e.g. lithography.

## Example 6

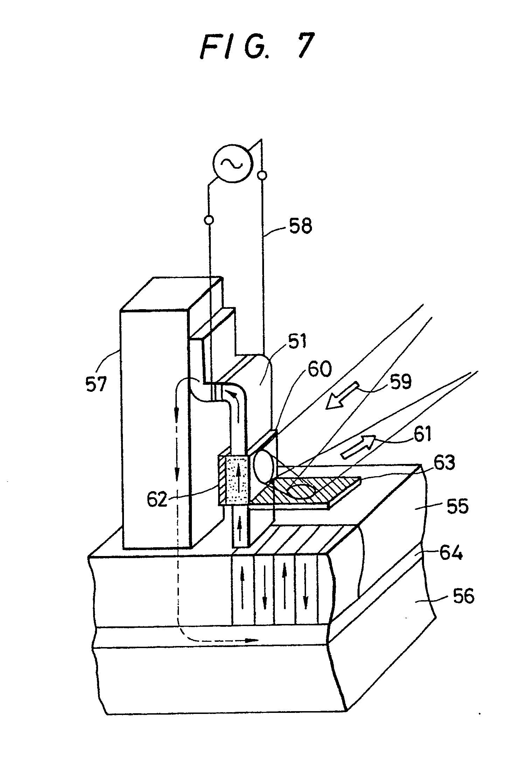

As shown in Fig. 7, an auxiliary pole 57 is provided on the same side as the main pole, and a high permeability film 64 (whose magnetization direction is in the surface) is arranged at the lower part of the perpendicular magnetic recording medium 55. This planar magnetization film 64 (of e.g. the Fe-Ni alloy called Permalloy) functions when it is at the lower part of the medium, even if it is not provided in the direct low part of the medium. The structure circumferentially of the main pole is the same as in Example 5. In this case, the magnetic circuit is perfectly closed through the magneto-optic thin film, i.e. the second magnetic thin film 60 having a magnetization direction parallel to or in the surface, and the reproducing efficiency of the magnetic information from the medium can be made maximum.

In Fig. 7, there is also shown a first magnetic thin film 51, a substrate 56 of a magnetic recording medium 55, a coil 58, a linearly polarized laser beam 59, a reflected beam 61, a reflection film 62, and a secondary reflection film 63. The arrows in the recording medium indicates the direction of magnetization and the arrows in the other magnetic materials indicate magnetic flux.

The magnetic head of this Example can also be manufactured by using a known thin film device manufacturing method in the same manner as in Examples 4 and 5.

The magnetic heads obtained by respective Examples in the above-described Examples 4 to 6 have been improved by about one order in magneto-optic conversion efficiency and reproduction efficiency when compared with the prior art magnetic head shown in Fig. 1.

As is evident from the above-described Examples, according to the present invention, the magnetization direction of a thin film having magneto-optic effect is parallel to the film surface, and hence the flux from the high permeability film of the main pole is induced to be approximately completely into the magneto-optic thin film, and the magneto-optic conversion efficiency and the reproduction efficiency are improved Therefore, according to the present invention, the line direction period of a magnetic disc may be of the order of the film thickness of 0.1 $\mu$m of the main pole, and together with that, the track direction period can be made equal to the laser beam diameter (1 to 5 $\mu$m). As a result, the recording density may be improved to a large extent up to the region of 10 bit/$\mu$m$^2$ which was impossible in the prior art.

## Claims

1. A magnetic head for perpendicular magnetic recording and optical read-out comprising:
   - an auxiliary pole (16);
   - a writing coil (13);
   - a main pole having a first magnetic thin film (11) of high permeability and a second magnetic thin film (12) having a magneto-optic effect;
   - a light beam incident to said second magnetic thin film;

   wherein said second magnetic thin film comprises at least a portion which is parallel to said first magnetic thin film and which, in use, is magnetically coupled with the leakage magnetic field from a magnetic recording medium (14);

   characterised in that:

the second magnetic thin film (12) has an easy-magnetisation axis parallel to or in its surface and, in use, perpendicular to said recording medium (14); and the direction of the light beam propagation forms an oblique angle with the surface of said second magnetic thin film (12).

2. A magnetic head according to claim 1, wherein the first and second magnetic thin films (11,12) are magnetically coupled.

3. A magnetic head according to claim 1 or claim 2, wherein the main pole is a double layer film including the first and second magnetic thin films (11,12).

4. A magnetic head according to claim 1 or claim 2, wherein the first magnetic thin film is divided into two parts and the second magnetic thin film connects those two parts.

5. A magnetic head according to claim 1, wherein the first and second magnetic thin films (11,12) are laminated together via a film of non-magnetic material.

6. A magnetic head according to any one of claims 1 to 5, wherein the permeability of the first magnetic thin film is at least $6.3 \times 10^{-4}$ T (500).

7. A magnetic head according to any one of claims 1 to 6, wherein the rotation angle of the polarization surface due to the magneto-optic effect of the second magnetic thin film (11) is at least $0.2°$.

8. A magnetic head according to any one of the preceding claims having a reflector (19) adjacent the second film (12) for reflecting to a detector light reflected from the second film (11).

**Revendications**

1. Tête magnétique pour un enregistrement magnétique perpendiculaire et une lecture optique comportant:
   - un pôle auxiliaire (16);
   - une bobine d'écriture (13);
   - un pôle principal possédant une première pellicule mince magnétique (11) de perméabilité élevée et une seconde pellicule mince magnétique (12) présentant un effet magnéto-optique;
   - un faisceau lumineux tombant sur ladite seconde pellicule mince magnétique;

dans laquelle ladite seconde pellicule mince magnétique comporte au moins une partie parallèle à ladite première pellicule mince magnétique et qui, en utilisation, est couplée magnétiquement au champ magnétique de fuite provenant d'un support d'enregistrement magnétique (14);
caractérisée en ce que la seconde pellicule mince magnétique (12) possède un axe de facile aimantation parallèle à ou dans sa surface et, en utilisation, perpendiculaire audit support d'enregistrement (14); et le sens de propagation du faisceau lumineux fait un angle oblique avec la surface de ladite seconde pellicule mince magnétique (12).

2. Tête magnétique selon la revendication 1, dans laquelle les première et seconde pellicules minces magnétiques (11,12) sont couplées magnétiquement.

3. Tête magnétique selon la revendication 1 ou la revendication 2, dans laquelle le pôle principal est une pellicule à double couche comprenant les première et seconde pellicules minces magnétiques (11,12).

4. Tête magnétique selon la revendication 1 ou la revendication 2, dans laquelle la première pellicule mince magnétique est divisée en deux parties et la seconde pellicule mince magnétique réunit ces deux parties.

5. Tête magnétique selon la revendication 1, dans laquelle les première et seconde pellicules minces magnétiques (11,12) sont stratifiées entre elles par l'intermédiaire d'une pellicule en matériau non magnétique.

6. Tête magnétique selon l'une quelconque des revendications 1 à 5, dans laquelle la perméabilité de la première pellicule mince magnétique est au moins $6,3 \times 10^{-4}$ T (500).

7. Tête magnétique selon l'une quelconque des revendications 1 à 6, dans laquelle l'angle de rotation de la surface de polarisation dû à l'effet magnéto-optique de la seconde pellicule mince magnétique (11) est au moins $0,2°$.

8. Tête magnétique selon l'une quelconque des revendications précédentes possédant un réflecteur (19) adjacent à la seconde pellicule (12) pour réfléchir vers un détecteur la lumière réfléchie par la seconde pellicule (11).

**Ansprüche**

1. Magnetkopf für senkrechtes magnetisches Aufzeichnen und optisches Auslesen umfassend
   einen Hilfspol (16),
   eine Schreibspule (13),
   einen Hauptpol, der einen ersten dünnen magnetischen Film (11) von hoher Permeabilität und einen zweiten dünnen magnetischen Film (12) mit einer magneto-optischen Wirkung hat,
   ein auf den zweiten dünnen magnetischen Film auftreffender Lichtstrahl,
   wobei der zweite dünne magnetische Film zumindest einen Teil umfaßt, der zu dem ersten dünnen magnetischen Film parallel verläuft und der während der Benutzung mit dem magnetischen Streufeld des magnetischen Aufzeichnungsmediums (14) magnetisch gekoppelt ist,
   dadurch gekennzeichnet, daß der zweite dünne magnetische Film (12) eine Achse leichter Magnetisierung hat, die parallel zu oder in seiner Oberfläche verläuft und während der Benutzung senkrecht zu dem Aufzeichnungsmedium (14) ist, und daß die Ausbreitungsrichtung des Lichtstrahls einen schrägen Winkel mit der Oberfläche des zweiten dünnen magnetischen Films (12) bildet.

2. Magnetkopf nach Anspruch 1, wobei der erste und der zweite dünne Magnetfilm (11, 12) magnetisch gekoppelt sind.

3. Magnetkopf nach Anspruch 1 oder 2, wobei der Hauptpol ein doppelschichtiger Film ist, der den ersten und zweiten dünnen magnetischen Film (11, 12) enthält.

4. Magnetkopf nach Anspruch 1 oder 2, wobei der erste dünne magnetische Film in zwei Teile geteilt ist und der zweite dünne magnetische Film diese zwei Teile verbindet.

5. Magnetkopf nach Anspruch 1, wobei der erste und der zweite dünne magnetische Film (11, 12) schichtweise durch einen Film aus nichtmagnetischem Material zusammengefügt sind.

6. Magnetkopf nach einem der Ansprüche 1 bis 5, wobei die Permeabilität des ersten dünnen magnetischen Films mindestens $6{,}3 \times 10^{-4}$ T (500) beträgt.

7. Magnetkopf nach einem der Ansprüche 1 bis 6, wobei der Rotationswinkel der Polarisationsfläche gemäß des magneto-optischen Effekts des zweiten dünnen magnetischen Films (11) zumindest $0{,}2°$ beträgt.

8. Magnetkopf nach einem der vorhergehenden Ansprüche, der einen zu dem zweiten Film (12) benachbarten Reflektor (19) hat, um das vom zweiten Film (11) reflektierte Licht zu einem Detektor zu reflektieren.

# FIG. 1
## PRIOR ART

# FIG. 2

EP 0 195 628 B1

FIG. 3

FIG. 4

FIG. 5

FIG. 6

EP 0 195 628 B1

# FIG. 7